# EUROPÄISCHE PATENTANMELDUNG

(11) **EP 0 562 328 A2**
(43) Veröffentlichungstag der Anmeldung: **29.09.1993**
(21) Anmeldenummer: 93103528.1
(22) Anmeldetag: 05.03.1993
(51) Int. Cl.: B01D 53/34, C02F 1/20

(54) **Verfahren zur Prozesswasserkonzentrierung und Abgasreinigung**

(30) Priorität: 24.03.1992 DE 4209498
(71) Anmelder: BASF Aktiengesellschaft, D-67063 Ludwigshafen (DE)
(72) Erfinder: Wunder, Rainer, Dr., W-6724 Dudenhofen (DE); Nitzschmann, Robert E., Dr., W-6710 Frankenthal (DE); Meyer, Bernd, Dr., W-6942 Moerlenbach (DE); Kling, Georg, Dr., W-6707 Schifferstadt (DE); Purucker, Bernhard, Dr., W-6700 Ludwigshafen (DE); Grimmer, Karl, W-6707 Schifferstadt (DE); Jaeger, Michael, W-6947 Laudenbach (DE); Minx, Ekkehard, Dr., W-6712 Bobenheim-Roxheim (DE)

(57) **Zusammenfassung**

Die Erfindung betrifft ein Verfahren zur Prozeßwasserkonzentrierung und Abgasreinigung, bei dem überhitzte Abgase zur Aufkonzentrierung von Prozeßwässern genutzt werden und gleichzeitig in derselben Apparatur die Abgase mit Hilfe der Prozeßwässer gereinigt werden. Ein Teilstrom der aufkonzentrierten Prozeßwässer wird ausgeschleust und kann einer weiteren Nutzung zugeführt werden.

## Beschreibung

Vorliegende Erfindung betrifft ein Verfahren zur Aufkonzentrierung von Prozeßwässern und gleichzeitiger Abgasreinigung in derselben Vorrichtung, wobei das entstehende Konzentrat einem Weiterverarbeitungsprozeß oder dem Produktionsprozeß, aus dem die Abwässer stammen, zugeführt werden kann.

Bei der Herstellung ammoniumhaltiger Düngemittel nach dem sogenannten Nitrophosphat-Prozeß, bei dem Rohphosphate mit Salpetersäure aufgeschlossen werden, fallen in verschiedenen Verfahrensstufen Abluftströme, welche Ammoniak, anorganische Fluorverbindungen und Staub enthalten, in unterschiedlicher Menge, Temperatur und Konzentration an und müssen vor Abgabe an die Umwelt gereinigt werden. Bei Produktumstellungen fallen Prozeßwässer in Form von Spülwässern an, welche Produktreste in geringer Konzentration enthalten und deshalb nach Aufkonzentrierung wieder in den Prozeß rückführbar wären.

Bei Rauchgaswäschen von Müllverbrennungsanlagen ist es bekannt, daß die sauren Abwässer der HCl- und SO₂-Waschstufen neutralisiert und mit einem Teilstrom der heißen Rauchgase in einem Sprühturm bis zum festen Rückstand aufkonzentriert werden. (vgl. wasser, luft und betrieb, 1 - 2, 1987, S. 40 - 43)
Aus der EP 440 932 A1 ist ein verfahren bekannt, bei dem NH₃ und gegebenenfalls Staub aus Abgasen, die bei der Herstellung von Düngemitteln anfallen, durch Absorption in einer Ammoniumnitratlösung entfernt werden. Die Aufkonzentrierung von Prozeßwässern wird in dieser Druckschrift nicht offenbart.

Der vorliegenden Erfindung lag die Aufgabe zugrunde, die Aufkonzentrierung von Prozeßwässern auf möglichst wirtschaftliche Weise mit geringem apparativen Aufwand so zu gestalten, daß die aufkonzentrierten Prozeßwässer einer weiteren Nutzung zugeführt werden können.

Die Aufgabe wird gelöst durch ein Verfahren zur gleichzeitigen Prozeßwasserkonzentrierung und Abgasreinigung, das dadurch gekennzeichnet ist, daß die Prozeßwässer einer Apparatur zugeführt werden, die zugeführten Prozeßwässer durch die in den Abgasen enthaltene Überhitzungswärme aufkonzentriert werden und die Prozeßwässer gleichzeitig als Waschlösung zur Abgasreinigung verwendet werden, wobei Aufkonzentrierung und Abgasreinigung in derselben Apparatur erfolgen und ein Teilstrom des aufkonzentrierten Prozeßwassers aus dem Waschprozeß abgeführt wird.

Es ist dabei bevorzugt, die aufkonzentrierten Prozeßwässer im Kreislauf zu führen.

Besonders bevorzugt handelt es sich bei den Prozeßwässern und Abgasen um Emissionsströme von Anlagen zur Herstellung von NP-Düngemitteln. In diesem Fall kann der abgeführte Teilstrom in die Düngemittelproduktion zurückgeführt werden, z.B. in die Maische-Eindampfung bei der Herstellung von Mehrnährstoffdüngern nach dem Nitrophosphat-Prozeß.

Durch das Aufkonzentrieren kann der Fall eintreten, daß flüchtige Komponenten nicht mehr in ausreichendem Maße in der Flüssigkeit gebunden werden, so daß die Abgase nicht mehr bestimmungsgemäß gereinigt werden. In diesem Fall werden deshalb im Konzentrator Reagenzien zugegeben, welche die flüchtigen Komponenten in der Flüssigkeit binden.

So sind in den Abgasen und Spülwässern von Düngemittelanlagen nach dem Nitrophosphat-Prozeß z.B. als flüchtige Komponenten insbesondere Ammoniak sowie anorganische Fluorverbindungen enthalten. Zur Bindung von Ammoniak ist die Zugabe von Säure, zur Bindung von Fluorverbindungen die Zugabe von Base erforderlich, um die Gase in nichtflüchtige gelöste Verbindungen zu überführen.

Ein ausreichender Gehalt beider Reagenzien in der Flüssigkeit läßt sich in besonders bevorzugter Weise dadurch erreichen, daß über die aufzukonzentrierenden Spülwässer, den aus den Abgasen abzutrennenden Staub oder durch gezielte Zugabe lösliche Phosphate im Flüssigkeitskreis gehalten werden, und daß durch Zugabe von Säuren oder Basen, vorzugsweise Salpetersäure und Ammoniak, ein solcher pH-Wert eingestellt wird, daß kein Aerosol eines NH₄-Salzes entsteht. Zum Problem der Aerosolbildung wird ausdrücklich auf die EP 440 932 A1 verwiesen, wo im einzelnen angegeben wird, wie diese Aerosole entstehen und wie ihre Bildung durch pH-Wert-Regelung verhindert werden kann. Als Konzentrator, d.h. als Vorrichtung, in dem das erfindungsgemäße Verfahren durchgeführt wird, eignet sich in besonderer Weise eine Füllkörperkolonne, da sich gezeigt hat, daß dieser Apparatetyp die Aufgabe der Abscheidung gas- und staubförmiger Abgasinhaltsstoffe erfüllt und unempfindlich gegenüber sich aufkonzentrierenden ungelösten Feststoffen ist.

Das Verfahren kann sinnvoll bei adiabaten Beharrungstemperaturen in der Apparatur im Bereich von 20°C bis ca. 100°C ausgeführt werden. Bevorzugt ist ein Temperaturbereich von 40°C bis 80°C.

Der in die Kolonne eingeführte Abgasstrom kann sich aus verschiedenen Teilströmen unterschiedlichen Sättigungsgrades zusammensetzen. So können zusammen mit dem Abgas oder auch in getrennter Einspeisung zusätzlich noch Brüden aus der Maischeeindampfung der Mehrnährstoffdüngerherstellung in die Apparatur eingeführt werden.

Der Gesamtfeststoffgehalt (d.h. gelöste und ungelöste Stoffe) im aufkonzentrierten Prozeßwasser beträgt bevorzugt 10 - 60 Gew.-%.

Es hat sich im übrigen gezeigt, daß sich die im Kreis geführte Menge an aufkonzentriertem Prozeßwasser dann gegenüber der in der EP 440 932 A1 genannten, mit Berechnungsformel beschriebenen Menge verringern läßt, wenn das Prozeßwasser die oben genannten löslichen Phosphate enthält.

### Beispiel

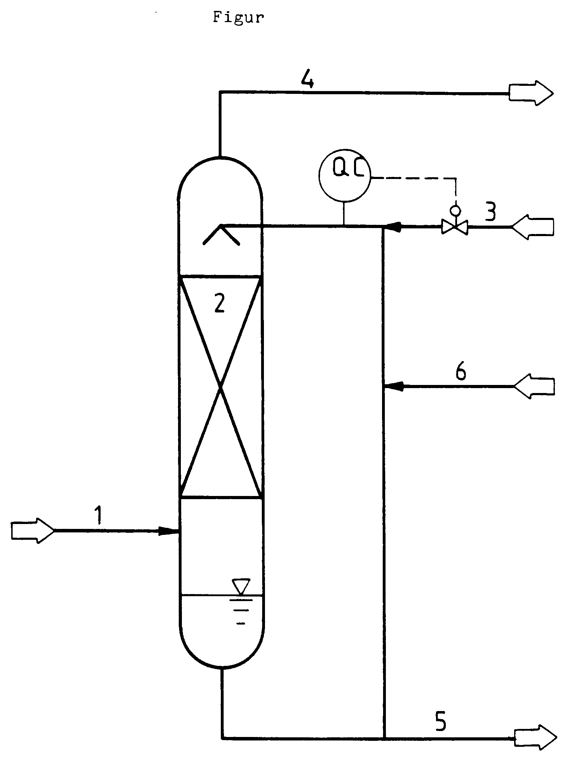

Die angegebenen Bezugszeichen beziehen sich auf die Figur.

Durch Leitung (6) wurde der Füllkörperkolonne (2) ein Prozeßwasserstrom zugeführt und über eine in der Figur nicht dargestellte Umwälzpumpe im Kreis geführt. Das Prozeßwasser enthielt im Mittel 4 Gew.-% Düngemittelbestandteile (NH₄^{⊕}-, PO₄^{3⊖}-, NO₃^{⊖}-, Ca^{2⊕}- und F^{⊖}-Ionen).

Über Leitung (1) wurde überhitztes Abgas mit einer Temperatur von 110°C und einem Wasserdampfgehalt von 200 g/m³_{N} (tr), einem NH₃-Gehalt von 500 mg/m³_{N} (tr), einem HF-Gehalt von 40 mg/m³_{N} (tr) und einem Staubgehalt von 400 mg/m³_{N} (tr) im Gegenstrom zugeführt. Durch Zugabe von Salpetersäure über Leitung (3) in den Waschkreis wurde ein pH-Wert von 3,5 eingestellt. Im Waschkreis stellte sich eine Temperatur von 65°C ein. Die Füllkörperschütthöhe in der Kolonne betrug 2,5 m. Je 30 000 m³_{N} (tr) heißen Abgases wurde 1 m³ Prozeßwasser aufkonzentriert.

Das Abgas sättigte sich mit zusätzlichem Wasserdampf und konzentrierte dadurch das eingespeiste Prozeßwasser auf über 40 Gew.-% Feststoffbestandteile (gelöst und ungelöst) auf. Ein Teilstrom dieses aufkonzentrierten Prozeßwassers wurde durch Leitung (5) abgeführt und in die Düngemittelproduktion zurückgeführt.

Die gewaschene Abluft (4) enthielt < 30 mg/m³ NH₃, < 5 mg/m³ HF und < 50 mg/m³ Staub.

## Patentansprüche

1. Verfahren zur Prozeßwasserkonzentrierung und Abgasreinigung, dadurch gekennzeichnet, daß die Prozeßwässer einer Apparatur zugeführt werden, die zugeführten Prozeßwässer durch die in den Abgasen enthaltene Überhitzungswärme aufkonzentriert werden und die Prozeßwässer gleichzeitig als Waschlösung zur Abgasreinigung verwendet werden, wobei Aufkonzentrierung und Abgasreinigung in derselben Apparatur erfolgen und ein Teilstrom des aufkonzentrierten Prozeßwassers aus dem Waschprozeß abgeführt wird.

2. Verfahren nach Anspruch 1, dadurch gekennzeichnet, daß die aufkonzentrierten Prozeßwässer im Kreislauf geführt werden.

3. Verfahren nach Anspruch 1, dadurch gekennzeichnet, daß in den aufkonzentrierten Prozeßwässern und den abgeschiedenen Abgasinhaltsstoffen enthaltene flüchtige Stoffe durch Zugabe von Reagenzien in der entstehenden Lösung gebunden werden.

4. Verfahren nach Anspruch 3, dadurch gekennzeichnet, daß es sich bei den flüchtigen Stoffen um saure und basische Komponenten handelt.

5. Verfahren nach Anspruch 1, dadurch gekennzeichnet, daß es sich bei den Prozeßwässern und Abgasen um Emissionsströme von Anlagen zur Herstellung von Düngemitteln handelt und der abgeführte Teilstrom in die Düngemittelproduktion zurückgeführt wird.

6. Verfahren nach Anspruch 5, dadurch gekennzeichnet, daß die Prozeßwässer auch Phosphat in Form von PO₄³-, HPO₄²-oder H₂PO₄- und die Abgase Staub, Ammoniak und anorganische Fluorverbindungen enthalten und als Reagenz Säure oder Base zugegeben wird, und daß in der Waschlösung ein solcher pH-Wert eingestellt wird, daß kein Aerosol eines NH₄-Salzes entsteht.

7. Verfahren nach Anspruch 6, dadurch gekennzeichnet, daß als Säure Salpetersäure und als Base Ammoniak eingesetzt wird.

8. Verfahren nach Anspruch 1, dadurch gekennzeichnet, daß die aufkonzentrierten Prozeßwässer ungelöste Feststoffe enthalten.

9. Verfahren nach Anspruch 1, dadurch gekennzeichnet, daß die aufkonzentrierten Prozeßwässer nicht eindampfbare Bestandteile in einer Konzentration von 10 - 60 Gew.-% enthalten.

10. Verfahren nach Anspruch 1, dadurch gekennzeichnet, daß Prozeßwasseraufkonzentrierung und Abgasreinigung gleichzeitig in einer Füllkörperkolonne durchgeführt werden.
